# EUROPÄISCHE PATENTSCHRIFT

(11) **EP 3 997 564 B1**
(45) Veröffentlichungstag und Bekanntmachung des Hinweises auf die Patenterteilung: **29.10.2025**
(21) Anmeldenummer: 20734862.4
(22) Anmeldetag: 18.06.2020
(51) Int. Cl.: G06F 8/60, G06F 9/445, G06F 8/30, B60K 1/00, B60K 17/354, B60K 17/356

(54) **CLUSTERSTRUKTUR ZUR PLAUSIBILISIERUNG EINER FAHRZEUGKOMPONENTEN-KODIERUNG**
CLUSTER STRUCTURE FOR THE PLAUSIBILITY CHECK OF VEHICLE COMPONENT CODING
STRUCTURE EN GRAPPE POUR LA PLAUSIBILISATION D'UN CODAGE DE COMPOSANT DE VÉHICULE

(30) Priorität: 08.07.2019 DE 102019210031
(43) Veröffentlichungstag der Anmeldung: 18.05.2022
(73) Patentinhaber: Volkswagen Aktiengesellschaft, 38440 Wolfsburg (DE)
(72) Erfinder: GRUNER, Steffen, 38542 Leiferde (DE); MEYRL, Nicolas, 38102 Braunschweig (DE)
(86) Internationale Anmeldenummer: PCT/EP2020/066884
(87) Internationale Veröffentlichungsnummer: WO 2021/004742

(56) Entgegenhaltungen:
- DE-A1- 10 234 063
- DE-B4- 10 234 063
- MANFRED BROY ET AL: "Architekturen softwarebasierter Funktionen im Fahrzeug: von den Anforderungen zur Umsetzung", INFORMATIK-SPEKTRUM ; ORGAN DER GESELLSCHAFT FÜR INFORMATIK E.V.UND MIT IHR ASSOZIIERTER ORGANISATIONEN, SPRINGER, BERLIN, DE, vol. 34, no. 1, 14 January 2011 (2011-01-14), pages 42 - 59, XP019875613, ISSN: 1432-122X, DOI: 10.1007/S00287-010-0507-6

## Beschreibung

Die Erfindung betrifft ein Verfahren zum Erstellen einer Clusterstruktur und ein entsprechendes Computerprogramm, ein Computerprogramm und Steuergerät zum Bedienen eines Fahrzeugs, einen Antriebsstrang für ein Fahrzeug und ein Fahrzeug mit einem solchen Antriebsstrang.

Im modernen Fahrzeugbau gibt es eine Vielzahl von variantentreibenden technischen Eigenschaften, die zu einer Vielzahl von Applikations- und Freigabevarianten führen. In einer Plattformvariante kann es dabei mehrere Ausstattungslinien geben, die sich unter anderem in der vom Kunden erlebbaren Leistungs-/Nennmoment und/oder Antriebsart unterscheiden. Dabei ist im Wesentlichen die gleiche Hardware in einem Fahrzeug verbaut, wobei nur die vom Kunden erlebbaren beziehungsweise erworbenen Merkmale freigeschaltet werden. Hierdurch kann die Produktion verschiedene Varianten kosteneffizient in einer Produktionslinie ablaufen. Ferner ist ein nachträgliches Nachrüsten und insbesondere Aufrüsten eines Fahrzeugs mit wenig Aufwand technisch einfach möglich.

Es gibt somit für einige technische Eigenschaften die Notwendigkeit, diese speziell zu schützen, damit es nicht zu einer bewussten Fehlcodierung kommen kann und somit nicht durch den Kunden erworbene technische Eigenschaften/Feature zu erhalten. Weiterhin besteht aus Gründen der funktionalen Sicherheit zur Einhaltung der ISO26262 die Notwendigkeit, sicherheitsrelevante Eigenschaften wie Nennmoment und Antriebsart als Information mit einem erhöhten Sicherheitsintegritätslevel zur Verfügung zu haben.

Aus der Druckschrift EP 3 073 438 A1 ist ein Verfahren sowie ein Fahrzeug-Computer zur Ermittlung einer Zugehörigkeit eines Fahrzeugs zu einer Abgasnorm aus einer Gruppe von Abgasnormen, umfassend eine erste und zweite Abgasnorm bekannt. Das Verfahren umfasst die Schritte: Einlesen einer ersten, zweiten und dritten Stelle oder ersten, zweiten und dritten Gruppe von Stellen einer gespeicherten Fahrzeug-Identifizierungsnummer, Bereitstellen eines Kennfelds, welches der ersten Stelle oder ersten Gruppe von Stellen und der zweiten Stelle oder zweiten Gruppe von Stellen der Fahrzeug-Identifizierungsnummer solche Kennwerte der dritten Stelle oder dritten Gruppe von Stellen von Fahrzeug-Identifizierungsnummern zuordnet, die ein der ersten Abgasnorm zugehöriges Fahrzeug kennzeichnen, Vergleich der eingelesenen dritten Stelle oder dritten Gruppe von Stellen der Fahrzeug-Identifizierungsnummer mit dem Kennwert aus dem Kennfeld, das der eingelesenen ersten Stelle oder ersten Gruppe von Stellen und der eingelesenen zweiten Stelle oder zweiten Gruppe von Stellen der Fahrzeug-Identifizierungsnummer zugeordnet ist, und in Abhängigkeit von einer festgestellten Übereinstimmung oder Nichtübereinstimmung des Kennwerts des Kennfelds und der eingelesenen dritten Stelle oder dritten Gruppe von Stellen der Fahrzeug-Identifizierungsnummer feststellen, ob das Fahrzeug der ersten Abgasnorm zugehörig ist oder nicht. Hierbei kann also nur eine Zuordnung eines Fahrzeugs zu einer Abgasnorm ermittelt werden, eine Plausibilisierung einer Komponenten-Kodierung erfolgt nicht.

Aus der Druckschrift DE 102 34 063 A1 ist ein Verfahren zum variantenspezifischen Programmieren eines Programm- und Datenspeichers eines Steuergeräts, insbesondere eines Steuergeräts eines Kraftfahrzeugs bekannt, wobei im Speicher ein Basisprogramm und mehrere variantenspezifische Programmänderungsinformationen sowie ein Basisdatensatz und mehrere variantenspezifische Datenänderungsinformationen abgelegt sind, die Informationen über im Basisprogramm und dem Basisdatensatz vorzunehmende variantenspezifische Änderungen enthalten, wobei zur Programmierung eine bestimmte variantenspezifische Programmänderungsinformation und Datenänderungsinformation über eine dem Steuergerät zu gebende Auswahlinformation gewählt und das Basisprogramm und der Basisdatensatz automatisch gemäß der Programm- und der Datenänderungsinformation geändert wird. Nachteilig ist hierbei, dass dem Steuergerät eine Auswahlinformation zugeführt werden muss. Das Steuergerät muss also zunächst variantenspezifisch eingerichtet werden.

Aus der Druckschrift DE 10 101 311 A1 ist ein Fahrzeugsteuergerät sowie ein Steuerungsverfahren, das für eine Vielzahl verschiedener Fahrzeugvarianten ausgelegt ist, bekannt. Das Steuergerät umfasst: Mittel zum Speichern einer Vielzahl von Steuerungsparametern für die verschiedenen Fahrzeugvarianten, Mittel zum Speichern einer Variantenkodierung zur Personalisierung des Fahrzeugsteuergeräts für eine vorbestimmte Fahrzeugvariante, wobei die Variantencodierung eine Anzahl von Bitstellen aufweist, und Mittel zum indirekten Auswählen von Steuerungsparametern aus den Steuerungsparameter-Speichermitteln durch algorithmisches Verarbeiten der Werte mehrerer Bitstellen der Variantenkodierung. Nachteilig ist hierbei, dass das Steuergerät zwar alle Steuerparameter für die verschiedenen Fahrzeugvarianten enthält, aber dennoch für eine vorbestimmte Fahrzeugvariante personalisierst werden muss. Das Steuergerät muss also zunächst variantenspezifisch eingerichtet werden, was technisch aufwendig und fehleranfällig ist.

Aus Manfred Broy et al. ("Architekturen softwarebasierter Funktionen im Fahrzeug: von den Anforderungen zur Umsetzung", INFORMATIK-SPEKTRUM; ORGAN DER GESELLSCHAFT FÜR INFORMATIK E.V. UND MIT IHR ASSOZIIERTER ORGANSIATIONEN, SPRINGER, BERLIN, DE, Bd. 34, Nr. 1 vom 14. Januar 2011, Seiten 42-59) ist ein Verfahren zum Erstellen einer Clusterstruktur bekannt, um eine Plausibilisierung einer Fahrzeugkomponenten-Kodierung zu ermöglichen.

Der Erfindung liegt die Aufgabe zugrunde, eine Verlagerung variantentreibender sicherheitsrelevanter Eigenschaften von Freigabeständen in die Kodierung zu ermöglichen. Dabei soll, trotz eines bestehenden vermeintlich unzureichenden Sicherheitsintegritätslevels von Kodierinformationen eine sichere Bildung von Informationen bezüglich Nennmoment und Antriebsart realisiert werden. Vorzugsweise soll eine Plausibilisierung einer Fahrzeugkomponenten-Kodierung ermöglicht werden, die mit wenigen Freigabezuständen auskommt. Insbesondere sollen dabei sicherheitsrelevante Eigenschaften wie Nennmoment und Antriebsart als Information mit einem erhöhten Sicherheitsintegritätslevel zur Verfügung gestellt werden.

Diese Aufgabe wird ganz oder teilweise durch ein Verfahren mit den Schritten des unabhängigen Anspruchs 1 sowie einem Computerprogramm nach Anspruch 7, einem Steuergerät nach Anspruch 12 einem Antriebsstrang nach Anspruch 13 und/oder einem Fahrzeug nach Anspruch 14 gelöst. Weitere bevorzugte Ausgestaltungen der Erfindung ergeben sich aus den übrigen, in den Unteransprüchen genannten Merkmalen.

Das erfindungsgemäße Verfahren zum Erstellen einer Clusterstruktur, um eine Plausibilisierung einer Fahrzeugkomponenten-Kodierung zu ermöglichen, umfasst die Schritte:
- Unterteilen von Objekten in Cluster;
- Unterteilen eines Clusters in Subcluster;
- Unterteilen eines Subclusters in Variantensubcluster, wobei ein Subcluster alle Variantensubcluster aufweist und ein Variantensubcluster alle Objekte mit einem vordefinierten Merkmal umfasst; und
- Überführen eines Subclusters in einen eigenen Freigabestand;
dadurch gekennzeichnet, dass
ein Variantensubcluster Objekte mit variantentreibenden technischen Eigenschaften umfasst, die mittels einer Konzerncodierung gesteuert werden, ohne eigene Freigabestände zu erzeugen.

Das erfindungsgemäße Computerprogramm zum Erstellen einer Clusterstruktur zur Plausibilisierung einer Fahrzeugkomponenten-Kodierung, umfasst Programm-Code-Mittel, um alle Schritte eines Verfahrens, wie zuvor beschrieben, durchzuführen, wenn das Computerprogramm auf einem Computer, einem Steuergerät und/oder einer entsprechenden Recheneinheit ausgeführt wird.

Das erfindungsgemäße Computerprogramm zum Bedienen eines Fahrzeugs umfasst Programm-Code-Mittel, die über funktionale Umfänge und Bedatungsumfänge verfügen, um alle Nennmoment- und/oder Antriebsartvarianten innerhalb einer Teilenummer abzudecken, sodass das Computerprogramm alle Fahrzeuge eines Variantensubclusters mit unterschiedlichem Nennmoment und/oder Antriebsart bedienen kann.

Das erfindungsgemäße Steuergerät ist für eine Vielzahl verschiedener Fahrzeugvarianten ausgelegt und umfasst:
- Mittel zum Speichern eines Steuerungsprogramms mit Vorschriften zum Steuern verschiedener Fahrzeugvarianten,
- Mittel, die über funktionale Umfänge und Bedatungsumfänge verfügen, um alle Nennmoment- und/oder Antriebsartvarianten innerhalb einer Teilenummer abzudecken, und
- Mittel zum Speichern und Ausführen eines Computerprogramms, wie oben definiert.

Hierdurch wird für die Plausibilisierung der Codierung eine Kombination aus einem definierten Variantenclustering und einer Funktion genutzt, die vorzugsweise anhand plausibilisierter Getriebeübersetzungen mit hohem Sicherheitsintegritätslevel auf die korrekte Codierung zurückschließt. Durch das Überführen ganzer Subcluster in eigene Freigabestände kommt das Verfahren insgesamt mit weniger Freigabeständen aus. Die technische Umsetzung ist wirtschaftlicher und weniger komplex möglich. Durch das erfindungsgemäße Computerprogramm zum Bedienen eines Fahrzeugs kann ein universelles Programm geschaffen werden, das für eine Vielzahl von Fahrzeugvarianten angewandt werden kann. Ein derartiger Ansatz ist wenig fehleranfällig und allgemein höchst wirtschaftlich.

Weitere bevorzugte Ausgestaltungen der Erfindung ergeben sich aus den übrigen, in den Unteransprüchen genannten Merkmalen.

In bevorzugter Ausgestaltung der Erfindung ist vorgesehen, dass ein Objekt eine und/oder mehrere Fahrzeugvarianten und/oder Fahrzeugkomponenten umfasst. Hierdurch kann das Verfahren sehr variabel in verschiedenen Bereichen und Teilbereichen beim Automobilbau eingesetzt werden.

In bevorzugter Ausgestaltung der Erfindung ist vorgesehen, dass das Unterteilen der Objekte in Cluster, ein Unterteilen anhand einer Plattformvariante und/oder eines Abgasmarktes umfasst, sodass jeder Cluster nur Varianten mit jeweils einer Plattformvariante und einem Abgasmarkt beinhaltet. Durch diese Bedingung kann ein in Bezug auf eine Fertigungsstraße logisches Clustern erfolgen. Ferner kann ein in Bezug auf den Markt und die am spezifischen Markt geforderten Spezifikationen erfolgen.

In bevorzugter Ausgestaltung der Erfindung ist vorgesehen, dass ein Variantensubcluster Objekte umfasst, die als vordefiniertes Merkmal über unterschiedliche Antriebsarten und/oder Getriebeübersetzungen an der Primärachse und/oder Sekundärachse verfügen. Im MEB (Modularer E-Antriebs-Baukasten) ist beispielsweise die Hinterachse als Primärachse festgelegt. Auf diese Weise kann technisch einfach ein Objekt eines Variantensubclusters eindeutig identifiziert werden.

In bevorzugter Ausgestaltung der Erfindung ist vorgesehen, dass ein Variantensubcluster anhand von Getriebeübersetzung an der Primärachse und/oder Sekundärachse und Antriebsart eindeutig einem Subcluster zuordenbar ist. Hierdurch kann ein Erzeugen eines Freigabezustands beziehungsweise ein Überführen in einen Freigabezustand für einen Subcluster technisch einfach gewährleistet werden.

In bevorzugter Ausgestaltung der Erfindung ist vorgesehen, dass in einem Variantensubcluster das Nennmoment, die Getriebeübersetzung an der Primärachse und/oder Sekundärachse und/oder die Antriebsart eindeutig ist. Es wird ein Satz von messbaren Parametern geschaffen, um eine Objektidentifizierung zu erlauben. Hierdurch kann technisch einfach gewährleistet werden, dass eine eindeutige Identifizierung eines Objekts im Variantensubcluster erreicht werden kann.

In bevorzugter Ausgestaltung der Erfindung ist vorgesehen, dass alle Variantensubcluster eines Subclusters ein unterschiedliches Nennmoment und/oder eine unterschiedliche Antriebsart aufweisen und mit einem gleichen Computerprogramm bedienbar sind. Hierdurch kann gewährleistet werden, dass in einem freigegebenen Computerprogramm zum Bedienen der Objekte technisch einfach sichergestellt werden kann, welches Objekt zu bedienen ist. Ein unterschiedliches Nennmoment und/oder eine unterschiedliche Antriebsart lassen sich technisch einfach, schnell und kosteneffizient, vorzugsweise ohne zusätzliche Sensoren, ermitteln.

In bevorzugter Ausgestaltung der Erfindung ist eine Programmfunktion vorgesehen, die anhand von Drehgeschwindigkeiten einer elektrischen Maschine an einer Primär- und/oder Sekundärachse und einer Geschwindigkeit eines Fahrzeugs Informationen bezüglich einer Antriebsart des Fahrzeugs ermittelt. Hierdurch können technisch einfach, insbesondere mit bereits vorhandenen Sensoren, Informationen bezüglich einer Antriebsart des Fahrzeugs ermittelt werden.

In bevorzugter Ausgestaltung der Erfindung ist vorgesehen, dass die Programmfunktion durch Abbildung einer Umkehr der Vorschriften zum Erstellen einer Clusterstruktur anhand der Informationen bezüglich einer Antriebsart und Getriebeübersetzungen für die Primär- und/oder Sekundärachse eindeutig weitere Informationen bezüglich des korrekten Nennmoments zur Plausibilisierung der Fahrzeugkomponenten-Kodierung ermittelt. Durch dieses Verfahren können die Informationen Nennmoment und Antriebsart wie gefordert dargestellt werden, ohne dass es notwendig ist, auf die eigentlichen Kodierinformationen zuzugreifen.

In bevorzugter Ausgestaltung der Erfindung ist vorgesehen, dass die ermittelten Informationen, einer weiteren Funktion zur sicherheitsgerichteten Umschaltung variantenabhängiger funktionaler Umfänge und Bedatungsumfänge übergeben werden. Hierdurch kann eine Plausibilisierung der Fahrzeugkomponenten-Kodierung für das komplette Fahrzeug technisch einfach geschaffen werden. Ferner ist es denkbar mehrere Indikatoren zur sicherheitsgerichteten Umschaltung variantenabhängiger funktionaler Umfänge und Bedatungsumfänge zu verwenden, um so die Zuverlässigkeit weiter zu erhöhen. Einer dieser Indikatoren kann die ermittelten Informationen umfassen.

Die verschiedenen in dieser Anmeldung genannten Ausführungsformen der Erfindung sind, sofern im Einzelfall nicht anders ausgeführt, mit Vorteil miteinander kombinierbar.

Der modulare E-Antriebs-Baukasten (MEB) ist ein Baukastensystem für die Herstellung von Elektroautos, das Volkswagen derzeit entwickelt. An die Stelle des Plattformprinzips trat ein flexibler Baukasten, der den Fahrzeugbau noch effizienter macht.

Konzerncodierung ist vorliegend ein Verfahren, bei dem die Fahrzeugkomponenten mit einem konzernspezifischen Code codiert werden. Bei Verwendung gleicher Komponenten für verschiedene Ausstattungsvarianten, muss ein Ansatz bereitgestellt werden, um die Konzerncodierung einer Komponente zu analysieren und die Komponenten in vorgesehener Weise in Bezug auf die Ausstattungsvariante anzusteuern beziehungsweise betreiben zu können.

Die Erfindung wird nachfolgend in Ausführungsbeispielen anhand der zugehörigen Zeichnungen erläutert. Es zeigen:
- Figur 1: eine schematische Darstellung eines erfindungsgemäßen Verfahrens;
- Figur 2: eine schematische Darstellung einer Clusterstruktur;
- Figur 3: eine schematische Darstellung eines Steuergeräts für ein Fahrzeug; und
- Figur 4: eine schematische Darstellung einer Draufsicht eines Fahrzeugs.

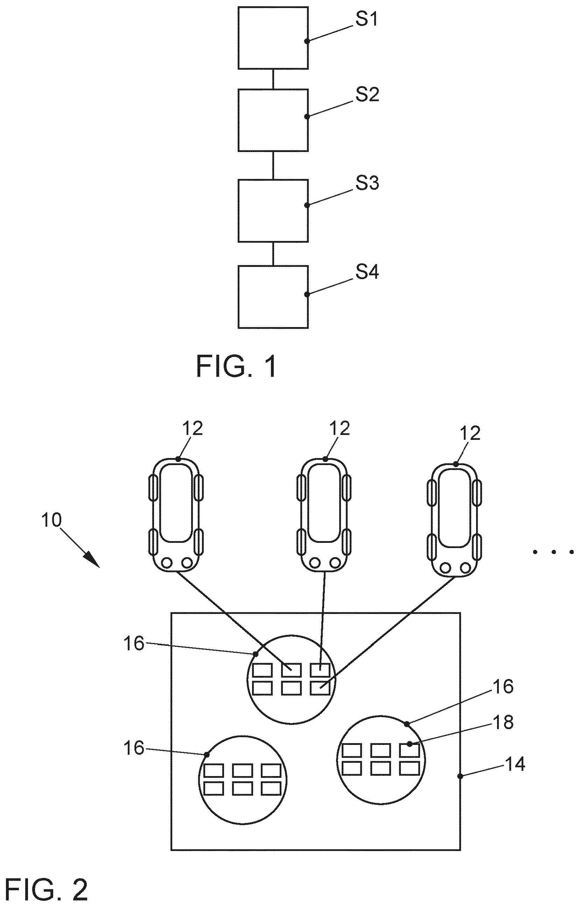

Figur 1 zeigt schematisch ein Verfahren zum Erstellen einer Clusterstruktur, um eine Plausibilisierung einer Fahrzeugkomponenten-Kodierung zu ermöglichen. In einem Schritt S1 werden Objekte, im gezeigten Beispiel Fahrzeuge, in Cluster unterteilt. In einem Schritt S2 werden diese Cluster in Subcluster unterteilt. In einem weiteren Schritt S3 werden diese Subcluster in Variantensubcluster unterteilt, wobei ein Subcluster alle Variantensubcluster aufweist und ein Variantensubcluster alle Objekte mit einem vordefinierten Merkmal umfasst. In einem Schritt S4 wird dann ein Subclusters in einen eigenen Freigabestand überführt und erhält dabei eine eigene Softwareteilenummer. Dabei umfasst ein Variantensubcluster variantentreibende technische Eigenschaften eines Objekts beziehungsweise Fahrzeugs, die über die Methode Konzerncodierung gesteuert werden, ohne eigene Freigabestände zu erzeugen.

In einer Plattformvariante kann es mehrere Ausstattungslinien geben, die sich unter anderem in der vom Kunden erlebbaren Leistungs-/Nennmoment (das Nennmoment ist durch die Leistungscodierung implizit codiert) und/oder Antriebsart unterscheidet.
- Beispiel 1: Pure = 93 kW, 210 Nm; Pure Power=110 kW, 310 Nm bei gleicher Batterie/Antriebs-Hardware;
- Beispiel 2 :Variante 1 = 165 kW, 390 Nm, Allrad; Variante 2 = 128 kW, 235 Nm, Heck bei gleicher Batterie-Hardware.

Der sichere Verbau im fahrzeugbauenden Werk kann über eine Zieldatencontainer-Codierung zwar sichergestellt werden, aber im Kundendienstfall, beispielsweise bei einem Tausch des Steuergeräts besteht die Gefahr einer Manipulation (Codierung höherer Leistung als vorher).

Ferner sollten aus Gründen der funktionalen Sicherheit Eigenschaften mit einer gewissen Sicherheitsrelevanz wie beispielsweise Nennmoment und Antriebsart als Information mit erhöhtem Sicherheitsintegritätslevel zur Verfügung stehen.

Die MEB Anlauflösung schützt nur den Diagnosezugang zum Steuergerät, prüft aber nicht die Richtigkeit der Codierung im Backend.

Es gibt folglich für einige technische Eigenschaften die Notwendigkeit, diese speziell zu schützen, damit es nicht zu einer bewussten und/oder unbewussten Fehlcodierung kommen kann.

Diese speziellen Eigenschaften sind in dem gezeigten Beispiel die Antriebsleistung.

Figur 2 zeigt eine schematische Darstellung einer Clusterstruktur 10. In dem gezeigten Beispiel sind die Objekte in Form von Fahrzeugen 12 in verschiedene Cluster 14 gruppiert. Ein Cluster 14 weist in dem gezeigten Beispiel alle Fahrzeuge 12 einer Plattformvariante und/oder eines Abgasmarktes auf. Jeder Cluster 14 enthält folglich nur Fahrzeuge 12 mit jeweils einer Plattformvariante und/oder für einen Abgasmarkt. Aus Gründen der Übersicht ist in der Figur 2 nur ein Cluster 14 dargestellt.

Der Cluster 14 enthält sogenannte Subcluster 16. Diese Subcluster 16 enthalten alle Fahrzeuge 12 mit einer vordefinierten Getriebeübersetzung an einer Primärachse und/oder Sekundärachse des Fahrzeugs 12 und/oder einer Antriebsart des Fahrzeugs 12.

Die Subcluster 16 enthalten Variantensubcluster 18, wobei ein Variantensubcluster 18 alle Fahrzeuge 12 mit einem vordefinierten Merkmal umfasst. Das vordefinierte Merkmal umfasst in diesem Beispiel unterschiedliche Antriebsarten und/oder Getriebeübersetzungen an der Primärachse und/oder Sekundärachse. In einem Variantensubcluster 18 ist das Nennmoment, die Getriebeübersetzung an der Primärachse und/oder Sekundärachse und/oder die Antriebsart eindeutig. Es gibt folglich nur ein Fahrzeug 12 mit einer bestimmten Getriebeübersetzung an der Primärachse und/oder Sekundärachse und/oder Antriebsart pro Variantensubcluster 18.

Alle Fahrzeuge 12 eines Variantensubclusters 18 weisen demnach ein unterschiedliches Nennmoment und/oder eine unterschiedliche Antriebsart auf. Ferner sind alle Fahrzeuge 12 mit einem gleichen Computerprogramm bedienbar.

Ein derartiges Computerprogramm kann mittels einer Programmfunktion Informationen bezüglich einer Antriebsart des Fahrzeugs 12 ermitteln. Das kann beispielsweise durch Auswerten von Drehgeschwindigkeiten einer elektrischen Maschine des Fahrzeugs 12 an einer Primär- und/oder Sekundärachse und einer Geschwindigkeit des Fahrzeugs 12 erreicht werden.

Ein derartiges Programm kann ferner durch eine Umkehr der Vorschriften zum Erstellen der Clusterstruktur 10 weitere Informationen bezüglich des korrekten Nennmoments zur Plausibilisierung der Fahrzeugkomponenten-Kodierung eindeutig ermitteln. Vorzugsweise kann das anhand der Informationen bezüglich einer Antriebsart und Getriebeübersetzungen für die Primär- und/oder Sekundärachse erreicht werden.

Es versteht sich, dass die ermittelten Informationen, einer weiteren Funktion zur sicherheitsgerichteten Umschaltung weiterer variantenabhängiger funktionaler Umfänge und Bedatungsumfänge übergeben werden können.

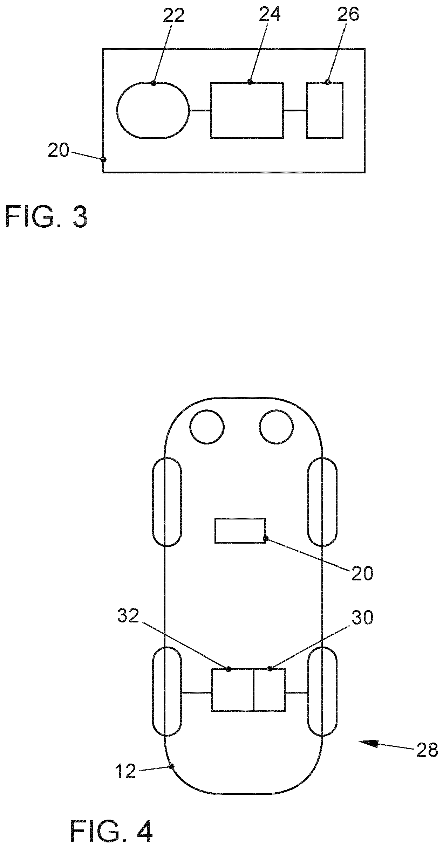

Figur 3 zeigt ein Steuergerät 20, das für eine Vielzahl verschiedener Fahrzeugvarianten von Fahrzeugen 12 ausgelegt ist. Das Steuergerät 20 umfasst Mittel zum Speichern von Steuerungsprogrammen 22 mit Vorschriften zum Steuern der verschiedenen Fahrzeugvarianten. Das Steuergerät 20 umfasst weitere Mittel 24, die über funktionale Umfänge und Bedatungsumfänge verfügen, um alle Nennmoment- und/oder Antriebsartvarianten innerhalb einer Teilenummer abzudecken. Schließlich umfasst das Steuergerät 20 Mittel zum Speichern und Ausführen 26 des oben beschriebenen Computerprogramms.

Es kann folglich dasselbe Steuergerät 20 für verschiedene Fahrzeugvarianten eingesetzt werden. Wobei das Steuergerät 20 eine Plausibilisierung der Fahrzeugkomponenten-Kodierung durchführt und die entsprechenden Vorschiften zum Steuern des Fahrzeugs 12 anwendet. Es kann ein universelles Steuergerät 20 geschaffen werden, das für verschiedene Fahrzeugvarianten einsetzbar ist und insbesondere einer ungewollten Umprogrammierung vorbeugen kann.

Mit einem derartigen Steuergerät 20 kann eine funktionale Sicherheit zur Einhaltung der ISO26262 geschaffen werden. Eine Notwendigkeit, sicherheitsrelevante Eigenschaften wie Nennmoment und Antriebsart als Information mit einem erhöhten Sicherheitsintegritätslevel zur Verfügung zu haben, wird mit dem Steuergerät 20 erreicht. Durch die Verlagerung variantentreibender sicherheitsrelevanter Eigenschaften von Freigabeständen in die Kodierung wird, trotz des bestehenden unzureichenden Sicherheitsintegritätslevels von Kodierinformationen, eine sichere Bildung der Informationen Nennmoment und Antriebsart erreicht.

In Figur 4 ist ein Fahrzeug 12 mit einem Antriebsstrang 28, einer elektrischen Maschine 30, die mit einem Getriebe 32 wirkverbunden ist, und einem Steuergerät 20 gezeigt. Das Steuergerät 20 ist, wie oben beschrieben, zur Steuerung des Fahrzeugs 12 ausgebildet und kann beispielsweise aus Drehgeschwindigkeiten der elektrischen Maschine 30 an einer Primärachse und einer Geschwindigkeit des Fahrzeugs 12 die Antriebsart und das Nennmoment des Fahrzeugs 12 ermitteln. Als Primärachse ist in diesem Beispiel die angetriebene Achse, also die in Fahrtrichtung hintere Achse anzusehen.

Eine Konzernkodierung der einzelnen Komponenten des Fahrzeugs 12 wird beim Betrieb folglich vom Steuergerät 12 plausibilisiert, sodass das korrekte Steuerverfahren von dem Steuergerät 20 ausgeführt wird und das Fahrzeug 12 gemäß der von einem Kunden gewünschten und/oder erworbenen Variante des Fahrzeugs 12 betrieben wird.

Da alle Fahrzeuge 12 eines Variantensubclusters 18 ein unterschiedliches Nennmoment und/oder eine unterschiedliche Antriebsart aufweisen, kann auf die oben beschriebene Weise eine eindeutige Identifizierung der Fahrzeugvariante erfolgen.

Es versteht sich, dass die oben beschriebene Clusterstruktur 10 nur beispielhaft gewählt wurde, um die Erfindung zu erläutern. Es sind weitere Clusterstrukturen 10 denkbar, insbesondere kann ein Clusteringalgorithmus vorgesehen sein, der anstatt anhand der Abgasmärkte und Plattformvarianten primär anhand der sicherheitsrelevanten technischen Unterschiede zwischen den Varianten clustert. Ferner können die variantentreibenden Eigenschaften verschieden zu den im obigen Beispiel aufgeführten variantentreibenden Eigenschaften gewählt werden.

Die Erfindung wurde ausführlich beschrieben. Mit der offenbarten Lehre können insbesondere durch wenigstens eine Ausführungsform die folgenden Vorteile erreicht und/oder Probleme gelöst werden:
Absicherung des Nennmomentes ohne Wegfahrsperrennutzung. Erfüllung von Sicherheitsanforderungen an die variantentreibenden technischen Eigenschaften ohne aufwendige Neuentwicklung des gesamten Codierprozesses und aller beteiligten Geräte und auch ohne Einführung von zahllosen Freigabeständen.

Durch das Verfahren, Computerprogramm und Steuergerät 20 können die Informationen Nennmoment und Antriebsart dargestellt werden, ohne dass es notwendig ist, auf die eigentlichen Kodierinformationen zuzugreifen. Insbesondere können die Informationen hierdurch mit einem höheren Sicherheitsintegritätslevel als die Kodierinformation dargestellt werden. Eine Verifizierung und/oder Überprüfung der Kodierinformation ist möglich. Es ist auch denkbar komplett auf eine Kodierinformation zu verzichten.

Eine immense Kostenersparnis aufgrund des Softwareerstellungs- und Freigabeprozesses, der mit Anzahl der Freigabestände linear skaliert, gegenüber Einführung eigener Freigabestände für alle Varianten, die sich in sicherheitsrelevanten Eigenschaften unterscheiden.

### Bezugszeichenliste

- 10: Clusterstruktur
- 12: Fahrzeug
- 14: Cluster
- 16: Subcluster
- 18: Variantensubcluster
- 20: Steuergerät
- 22: Mittel zum Speichern von Steuerungsprogrammen
- 24: weitere Mittel
- 26: Mittel zum Speichern und Ausführen
- 28: Antriebsstrang
- 30: elektrische Maschine
- 32: Getriebe
- S1: erster Verfahrensschritt
- S2: zweiter Verfahrensschritt
- S3: dritter Verfahrensschritt
- S4: vierter Verfahrensschritt

## Patentansprüche

1. Verfahren zum Erstellen einer Clusterstruktur (10) durch ein Computerprogramm in einem Steuergerät (20) eines Fahrzeugs (12), um eine Plausibilisierung einer Fahrzeugkomponenten-Kodierung zu ermöglichen, mit den Schritten:
• Unterteilen (S1) von Objekten in Cluster (14);
• Unterteilen (S2) eines Clusters (14) in Subcluster (16);
• Unterteilen (S3) eines Subclusters (16) in Variantensubcluster (18), wobei ein Subcluster (16) alle Variantensubcluster (18) aufweist und ein Variantensubcluster (18) alle Objekte mit einem vordefinierten Merkmal umfasst; und
• Überführen (S4) eines Subclusters (16) in einen eigenen Freigabestand;
**dadurch gekennzeichnet, dass** ein Variantensubcluster (18) Objekte mit variantentreibenden technischen Eigenschaften des Fahrzeugs (12) umfasst, die mittels einer Konzerncodierung gesteuert werden, ohne eigene Freigabestände zu erzeugen, wobei ein Objekt eine oder mehrere Fahrzeugvarianten oder Fahrzeugkomponenten umfasst.

2. Verfahren nach Anspruch 1, **dadurch gekennzeichnet, dass** das Unterteilen der Objekte in Cluster (14), ein Unterteilen anhand einer Plattformvariante und/oder eines Abgasmarktes umfasst, sodass jeder Cluster (14) nur Varianten mit jeweils einer Plattformvariante und einem Abgasmarkt beinhaltet.

3. Verfahren nach einem der vorstehenden Ansprüche, **dadurch gekennzeichnet, dass** ein Variantensubcluster (18) Objekte umfasst, die als vordefiniertes Merkmal über unterschiedliche Antriebsarten und/oder Getriebeübersetzungen an der Primärachse und/oder Sekundärachse verfügen.

4. Verfahren nach einem der vorstehenden Ansprüche, **dadurch gekennzeichnet, dass** ein Variantensubcluster (18) anhand von Getriebeübersetzung an der Primärachse und/oder Sekundärachse und Antriebsart eindeutig einem Subcluster (16) zuordenbar ist.

5. Verfahren nach einem der vorstehenden Ansprüche, **dadurch gekennzeichnet, dass** in einem Variantensubcluster (18) das Nennmoment, die Getriebeübersetzung an der Primärachse und/oder Sekundärachse und/oder die Antriebsart eindeutig sind.

6. Verfahren nach einem der vorstehenden Ansprüche, **dadurch gekennzeichnet, dass** alle Variantensubcluster (18) eines Subclusters (16) ein unterschiedliches Nennmoment und/oder eine unterschiedliche Antriebsart aufweisen und mit einem gleichen Computerprogramm bedienbar sind.

7. Computerprogramm zum Erstellen einer Clusterstruktur (10) in einem Steuergerät (20) eines Fahrzeugs (12) zur Plausibilisierung einer Fahrzeugkomponenten-Kodierung, mit Programm-Code-Mitteln, um alle Schritte eines Verfahrens nach einem der Ansprüche 1 bis 6 durchzuführen, wenn das Computerprogramm in einem Steuergerät (20) des Fahrzeugs (12) ausgeführt wird.

8. Computerprogramm nach Anspruch 7 mit Programm-Code-Mitteln, die über funktionale Umfänge und Bedatungsumfänge verfügen, um alle Nennmoment- und/oder Antriebsartvarianten innerhalb einer Teilenummer abzudecken, sodass das Computerprogramm alle Fahrzeuge (12) eines Variantensubclusters (18) mit unterschiedlichem Nennmoment und/oder Antriebsart bedienen kann.

9. Computerprogramm nach dem vorstehenden Anspruch, **gekennzeichnet durch** eine Programmfunktion, die anhand von Drehgeschwindigkeiten einer elektrischen Maschine (30) an einer Primär- und/oder Sekundärachse und einer Geschwindigkeit eines Fahrzeugs (12) Informationen bezüglich einer Antriebsart des Fahrzeugs (12) ermittelt.

10. Computerprogramm nach dem vorstehenden Anspruch, **dadurch gekennzeichnet, dass** die Programmfunktion durch Abbildung einer Umkehr der Vorschriften zum Erstellen einer Clusterstruktur (10) anhand der Informationen bezüglich einer Antriebsart und Getriebeübersetzungen für die Primär- und/oder Sekundärachse eindeutig weitere Informationen bezüglich des korrekten Nennmoments zur Plausibilisierung der Fahrzeugkomponenten-Kodierung ermittelt.

11. Computerprogramm nach einem der vorstehenden Ansprüche, **dadurch gekennzeichnet, dass** die ermittelten Informationen, einer weiteren Funktion zur sicherheitsgerichteten Umschaltung variantenabhängiger funktionaler Umfänge und Bedatungsumfänge übergeben werden.

12. Steuergerät (20), das für eine Vielzahl verschiedener Fahrzeugvarianten ausgelegt ist, mit:
• Mittel zum Speichern eines Steuerungsprogramms (22) mit Vorschriften zum Steuern verschiedener Fahrzeugvarianten,
• Mittel (24), die über funktionale Umfänge und Bedatungsumfänge verfügen, um alle Nennmoment- und/oder Antriebsartvarianten innerhalb einer Teilenummer abzudecken, und
• Mittel zum Speichern und Ausführen (26) eines Computerprogramms nach einem der Ansprüche 7 bis 11.

13. Antriebsstrang (28) für ein Fahrzeug (12), mit:
• einem Steuergerät (20) nach dem vorstehenden Anspruch;
• einer Antriebsmaschine zum Bereitstellen von Antriebsleistung; und
• einem Getriebe (32), um die Antriebsleistung der Antriebsmaschine zu übersetzen und Antriebsrädern des Fahrzeugs (12) zuzuführen.

14. Fahrzeug (12) mit einem Antriebsstrang (28) nach dem vorstehenden Anspruch.

## Claims

1. Method for creating a cluster structure (10) using a computer program in a control unit (20) of a vehicle (12) to allow a plausibility check of vehicle component coding, comprising the steps of:
• dividing (S1) objects into clusters (14);
• dividing (S2) a cluster (14) into subclusters (16);
• dividing (S3) a subcluster (16) into variant subclusters (18), a subcluster (16) comprising all variant subclusters (18) and a variant subcluster (18) comprising all objects having a predefined feature; and
• transferring (S4) a subcluster (16) to its own release status;
**characterized in that** a variant subcluster (18) comprises objects having variant-driving technical properties of the vehicle (12), which are controlled by means of group coding without generating their own release statuses, an object comprising one or more vehicle variants or vehicle components.

2. Method according to claim 1, **characterized in that** the division of the objects into clusters (14) comprises a division based on a platform variant and/or an exhaust gas market, so that each cluster (14) contains only variants having one platform variant and one exhaust gas market each.

3. Method according to either of the preceding claims, **characterized in that** a variant subcluster (18) comprises objects which, as a predefined feature, have different drive types and/or transmission ratios on the primary axle and/or secondary axle.

4. Method according to any of the preceding claims, **characterized in that** a variant subcluster (18) can be assigned uniquely to a subcluster (16) on the basis of the transmission ratio on the primary axle and/or secondary axle and the drive type.

5. Method according to any of the preceding claims, **characterized in that** in a variant subcluster (18), the nominal torque, the transmission ratio on the primary axle and/or secondary axle and/or the drive type are unique.

6. Method according to any of the preceding claims, **characterized in that** all variant subclusters (18) of a subcluster (16) have a different nominal torque and/or a different drive type and can be operated with the same computer program.

7. Computer program for creating a cluster structure (10) in a control unit (20) of a vehicle (12) for a plausibility check of vehicle component coding, the program having program code means for carrying out all steps of a method according to any of claims 1 to 6 when the computer program is executed in a control unit (20) of the vehicle (12).

8. Computer program according to claim 7 having program code means which have functional scopes and data scopes in order to cover all nominal torque and/or drive type variants within a part number, so that the computer program can operate all vehicles (12) of a variant subcluster (18) having a different nominal torque and/or drive type.

9. Computer program according to the preceding claim, **characterized by** a program function which determines information regarding a drive type of the vehicle (12) on the basis of rotational speeds of an electric machine (30) on a primary and/or secondary axle and a speed of a vehicle (12).

10. Computer program according to the preceding claim,
**characterized in that** the program function, by mapping a reversal of the instructions for creating a cluster structure (10) on the basis of the information regarding a drive type and transmission ratios for the primary and/or secondary axle, clearly determines further information regarding the correct nominal torque for the plausibility check of the vehicle component coding.

11. Computer program according to any of the preceding claims,
**characterized in that** the determined information is transferred to a further function for safety-related switching of variant-dependent functional scopes and data scopes.

12. Control unit (20) designed for a plurality of different vehicle variants, the control unit comprising:
• means (22) for storing a control program having instructions for controlling different vehicle variants,
• means (24) that have functional scopes and data scopes in order to cover all nominal torque and/or drive type variants within a part number, and
• means (26) for storing and executing a computer program according to any of claims 7 to 11.

13. Drivetrain (28) for a vehicle (12), comprising:
• a control unit (20) according to the preceding claim;
• an engine for providing drive power; and
• a transmission (32) to translate the drive power of the engine and supply it to the drive wheels of the vehicle (12).

14. Vehicle (12) comprising a drivetrain (28) according to the preceding claim.

## Revendications

1. Procédé de création d'une structure de grappe (10) par un programme d'ordinateur dans un appareil de commande (20) d'un véhicule (12), afin de permettre une plausibilisation d'un codage de composants de véhicule, comportant les étapes suivantes :
• division (S1) d'objets en grappes (14) ;
• division (S2) d'une grappe (14) en sous-grappes (16) ;
• division (S3) d'une sous-grappe (16) en sous-grappes de variantes (18), dans lequel une sous-grappe (16) présente toutes les sous-grappes de variantes (18) et une sous-grappe de variantes (18) comprend tous les objets comportant une caractéristique prédéfinie ; et
• transfert (S4) d'une sous-grappe (16) dans un état de validation propre ;
**caractérisé en ce qu'**une sous-grappe de variantes (18) comprend des objets comportant des caractéristiques techniques du véhicule (12) entraînant des variantes, qui sont commandés au moyen d'un codage de groupe sans générer d'états de validation propres, dans lequel un objet comprend une ou plusieurs variantes de véhicule ou composants de véhicule.

2. Procédé selon la revendication 1, **caractérisé en ce que** la division des objets en grappes (14) comprend une division à l'aide d'une variante de plate-forme et/ou d'un marché de gaz d'échappement, de sorte que chaque grappe (14) contient uniquement des variantes comportant respectivement une variante de plate-forme et un marché de gaz d'échappement.

3. Procédé selon l'une des revendications précédentes, **caractérisé en ce qu'**une sous-grappe de variantes (18) comprend des objets qui disposent, en tant que caractéristique prédéfinie, de différents types d'entraînement et/ou de rapports de transmission sur l'essieu primaire et/ou l'essieu secondaire.

4. Procédé selon l'une des revendications précédentes, **caractérisé en ce qu'**une sous-grappe de variantes (18) peut être attribuée de manière univoque à une sous-grappe (16) à l'aide du rapport de transmission sur l'essieu primaire et/ou l'essieu secondaire et du type d'entraînement.

5. Procédé selon l'une des revendications précédentes,
**caractérisé en ce que,** dans une sous-grappe de variantes (18), le couple nominal, le rapport de transmission sur l'essieu primaire et/ou l'essieu secondaire et/ou le type d'entraînement sont univoques.

6. Procédé selon l'une des revendications précédentes,
**caractérisé en ce que** toutes les sous-grappes de variantes (18) d'une sous-grappe (16) présentent un couple nominal différent et/ou un type d'entraînement différent et peuvent être utilisées avec un même programme d'ordinateur.

7. Programme d'ordinateur permettant de créer une structure de grappe (10) dans un appareil de commande (20) d'un véhicule (12) pour la plausibilisation d'un codage de composants de véhicule, comportant des moyens de code de programme pour exécuter toutes les étapes d'un procédé selon l'une des revendications 1 à 6, lorsque le programme d'ordinateur est exécuté dans un appareil de commande (20) du véhicule (12).

8. Programme d'ordinateur selon la revendication 7 comportant des moyens de code de programme qui disposent de volumes fonctionnels et de volumes de données pour couvrir toutes les variantes de couple nominal et/ou de type d'entraînement dans un numéro de pièce, de sorte que le programme d'ordinateur peut servir tous les véhicules (12) d'une sous-grappe de variantes (18) avec un couple nominal et/ou un type d'entraînement différents.

9. Programme d'ordinateur selon la revendication précédente,
**caractérisé par** une fonction de programme qui, à l'aide de vitesses de rotation d'une machine électrique (30) sur un essieu primaire et/ou secondaire et d'une vitesse d'un véhicule (12), détermine des informations concernant un type d'entraînement du véhicule (12).

10. Programme d'ordinateur selon la revendication précédente,
**caractérisé en ce que** la fonction de programme détermine de manière univoque d'autres informations concernant le couple nominal correct pour la plausibilisation du codage de composants de véhicule en reproduisant une inversion des prescriptions pour créer une structure de grappe (10) à l'aide des informations concernant un type d'entraînement et des rapports de transmission pour l'essieu primaire et/ou secondaire.

11. Programme d'ordinateur selon l'une des revendications précédentes,
**caractérisé en ce que** les informations déterminées sont transmises à une autre fonction pour la commutation de sécurité de volumes fonctionnels dépendant de variantes et de volumes de données.

12. Appareil de commande (20) adapté pour une pluralité de variantes de véhicule différentes, comportant :
• des moyens pour mémoriser un programme de commande (22) comportant des règles pour commander différentes variantes de véhicule,
• des moyens (24) disposant de volumes fonctionnels et de volumes de données pour couvrir toutes les variantes de couple nominal et/ou de type d'entraînement dans un numéro de pièce, et
• des moyens pour stocker et exécuter (26) un programme d'ordinateur selon l'une des revendications 7 à 11.

13. Chaîne cinématique (28) pour un véhicule (12), comportant :
• un appareil de commande (20) selon la revendication précédente ;
• une machine d'entraînement pour fournir une puissance d'entraînement ; et
• une transmission (32) pour démultiplier la puissance d'entraînement de la machine d'entraînement et l'appliquer à des roues motrices du véhicule (12).

14. Véhicule (12) comportant une chaîne cinématique (28) selon la revendication précédente.
